Europäisches Patentamt

(19) European Patent Office

Office européen des brevets

(11) Publication number: **0 284 122**
**A1**

## (12) EUROPEAN PATENT APPLICATION

(21) Application number: 88200320.5

(51) Int. Cl.⁴: **F16B 12/40** , F16B 7/04

(22) Date of filing: 22.02.88

(30) Priority: 20.02.87 NL 8700434

(43) Date of publication of application:
28.09.88 Bulletin 88/39

(84) Designated Contracting States:
BE DE ES FR GB NL

(71) Applicant: Jonker, Robert Gerard Cornelis
24, Toernooiveld
NL-4902 PH Oosterhout(NL)

(72) Inventor: Jonker, Robert Gerard Cornelis
24, Toernooiveld
NL-4902 PH Oosterhout(NL)

(74) Representative: Hoorweg, Petrus Nicolaas et al
OCTROOIBUREAU ARNOLD & SIEDSMA
Sweelinckplein 1
NL-2517 GK The Hague(NL)

(54) Tridimensional construction.

(57) A tridimensional construction consisting of profiled uprights (1) having one or more undercut lengthwise grooves (18) in the outer periphery thereof, and beams (2) with an open or closed channel-like cross-section, which uprights and beams are joined to each other by a clamping member (3) held in the end wall portion of a beam, this member having a hook-like end part to be inserted into the undercut groove, said clamping consisting of two identical plate-like parts (4, 5) each part being provided with a groove for the forming of a hook-like end part, wherein in the opposite end part on the side facing away from the groove a slot (7) is arranged for receiving a flexible spring strip (14) whilst a pressure element (11) counter-acting the spring action is arranged between both plate-like parts for moving said parts apart.

FIG. 1

## Tridimensional construction

This invention relates to a tridimensional construction consisting of profiled uprights having one or more undercut lengthwise grooves in the outer periphery thereof, and beams with an open or closed channel-form transverse profile, which uprights and beams are jointed to each other by a clamping member held in the end wall portion of a beam, this member having a hook-like end part that is inserted into the undercut groove.

Such tridimensional constructions are frequently used for shop fittings, exhibitions and the like, whereby the uprights and beams can be connected together without a lot of tools and without the connecting requiring particular skills. There is also a great degree of freedom in the location of the connection. Many clamping members for such tridimensional constructions have been proposed in the past, but they all had the drawback of a rather complex form, which has the effect of increasing the costs.

The invention has for its object to simplify a clamping member for a tridimensional construction of the type described in the preamble such that a particularly cheap solution is provided. Fitting is moreover facilitated and damage to the profiles avoided.

The construction according to the invention is distinguished in that the clamping member consists of two identical plate-like parts, that each part is provided with a groove for the forming of a hook-like end part, whereby in the opposite end part on the side facing away from the groove a slot is arranged for receiving a flexible spring strip and that between both plate-like parts is arranged a pressure element acting counter to the spring action for moving apart the plate-like parts.

As a result of the uniform nature of its components the clamping member can be manufactured simply from a single extruded profile strip whereby the leaf spring ensures the required connection.

The slots of the plate-like parts that lie opposite each other preferably form an angle relative to each other so that a simple leaf spring that is flat in unloaded state will be sufficient.

In order to protect the profiles when clamping in place it is recommended that both plate-like parts of the clamping member are held in a protective casing which is preferably provided with two flanges running parallel to the grooves in the plate-like parts. These flanges, which are directed outwards, ensure that the clamping member does not sink down into the channel-form profile.

To prevent the member falling out on the other hand a lip of the casing is preferably formed for insertion into a recess of the plate-like part.

The invention is further elucidated in the figure description of an embodiment following hereinafter.

In the drawing:

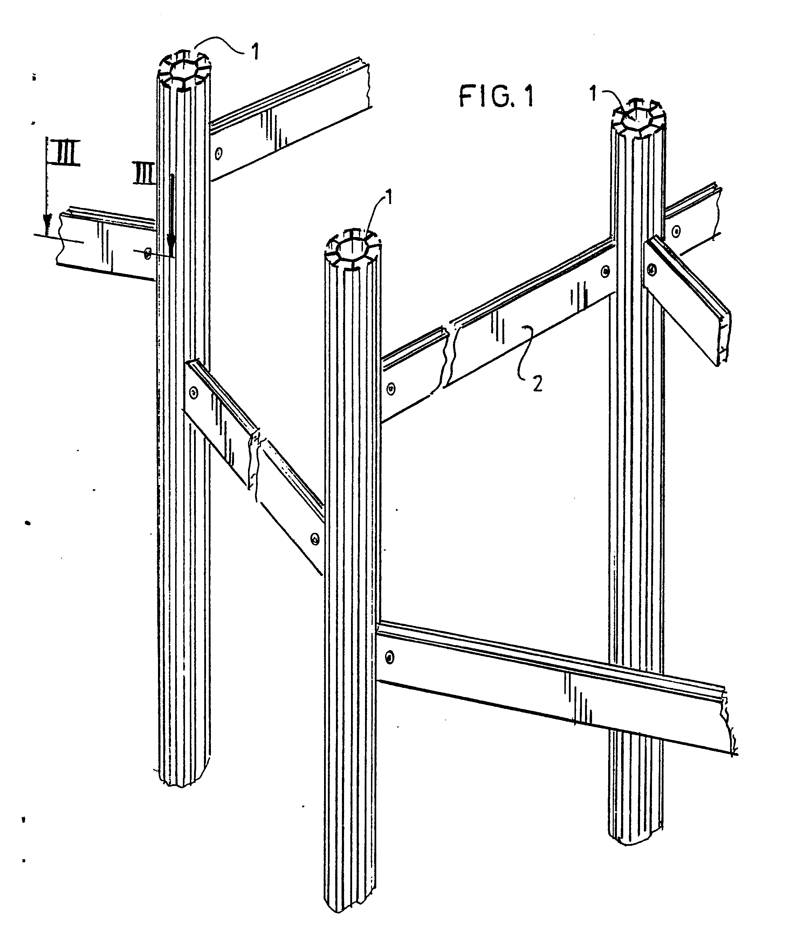

Fig. 1 shows a tridimensional construction according to the invention consisting of uprights and beams;

fig. 2 is a perspective view of the clamping member with protective casing, end of a beam and part of an upright in dismantled state;

fig. 3 is a section along the line III-III in fig. 1, and

fig. 4 shows a perspective view of an embodiment whereby the beam assumes an angle relative to the upright that deviates from 90.

In the figures the same parts are designated with the same reference numerals. The number 1 indicates the upright with which the tridimensional construction according to the invention can be built up. These uprights 1 are joined to one another by beams 2 which can enclose an angle of 90 with the upright or, as shown in fig. 4, an angle deviating therefrom.

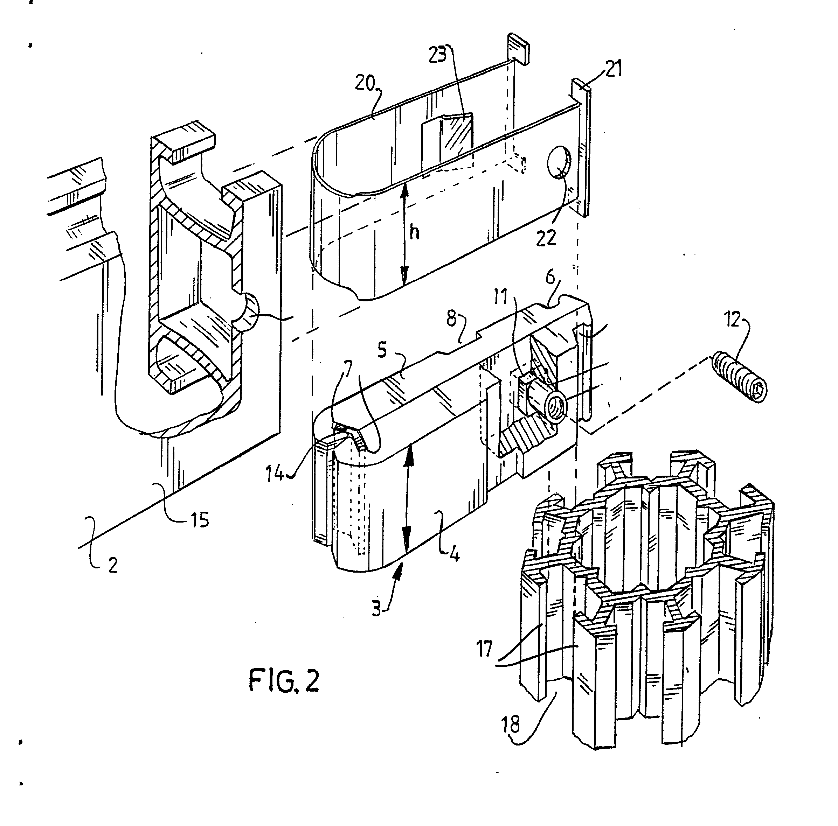

The connection between uprights 1 and beams 2 is performed by means of a clamping member 3 shown in detail in fig. 2.

In accordance with the invention this clamping member 3 consists of two plate-like parts 4 and 5 which have the same cross sectional shape. It is therefore possible to manufacture both plate-like parts 4 from the same profile stock by sawing off this profile stock at the required length each time. This length corresponds to the height $\underline{h}$ of each plate-like part. The profile is such that at one end of the plate-like part a groove 6 is formed, whereby on the other side and close to the opposite end of the plate-like part a slot 7 is arranged. The groove and the slot run parallel to each other.

Also let into each plate-like part on the outside of the clamping member is a recess 8.

The only additional process a plate-like part has to undergo is the drilling of a hole 9 in which can be accommodated a screwed sleeve 10 with an enlarged head 11. The screwed sleeve 10 is provided with an internal screw thread so that a socket head screw 12 can be screwed into it.

Formed in each plate-part 4, 5 on the sides facing each other is a circular cavity for receiving the enlarged head 11 of screwing sleeve 10.

The length of the screwed sleeve 10 is such that it protrudes outside the plate-like part 4 for a reason to be explained later.

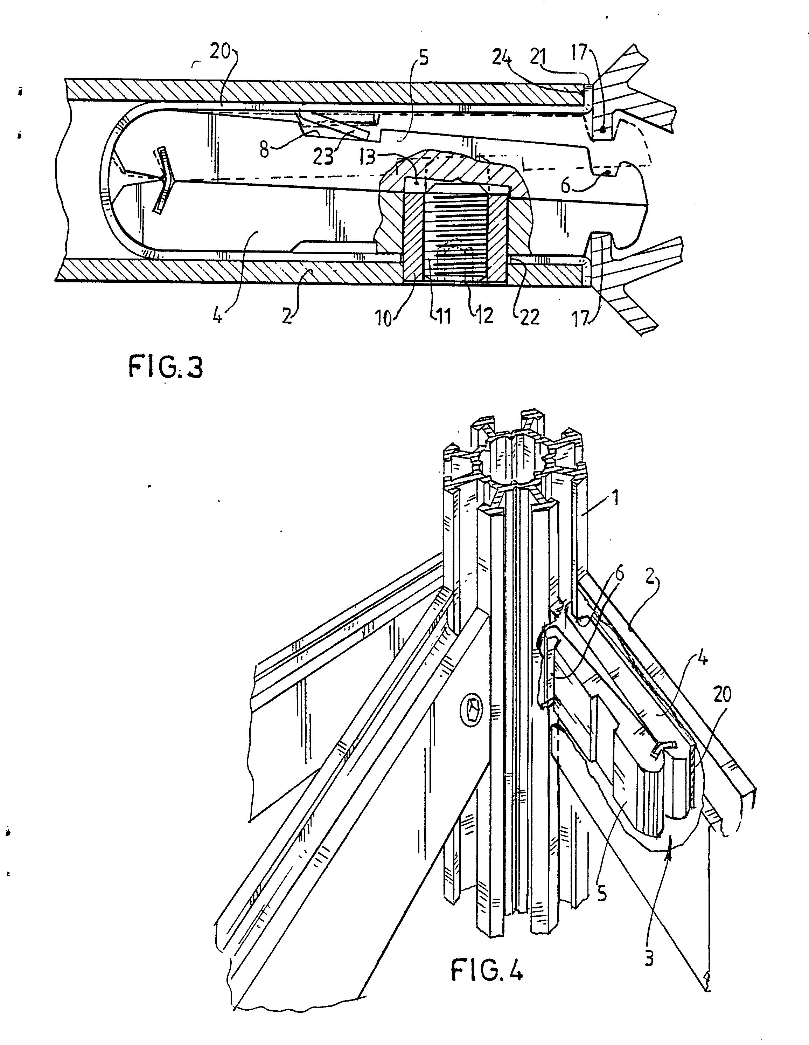

Accommodated in slot 7 is a leaf spring 14 which in unloaded state has a straight form. Because the slots which incline from the inner face towards the outer end are at an angle relative to each other, a broad V-shaped space is created so that when leaf spring 7 is placed a force is exerted on the plate-like parts which presses them towards each other, as shown in fig. 2 and 3.

For fitting of the clamping member on the end 15 of a beam 2 a hole 16 has first to be drilled in the side wall of the beam in the form of a tubular profile. The placing of this hole 16 is such that the screwed sleeve 10 can be received therein and the grooves 6 remain protruding outside the profile 2.

As a result of being tightened the socket head screw 12 will displace upward in fig. 3 relative to screwed sleeve 10 and strike with its outer end against the plate-like body 5. When further tightened the plate-like body 5 will be moved away from the plate-like body 4, this being possible because the leaf spring 7 functions as a hinge. When the screw has been screwed in sufficiently the groove 6 of plate-like part 5 will come to lie against the flanges 17 of an undercut groove 18 of the upright that are facing towards each other, this being shown with dashed lines in fig. 3.

The dimension of the groove is such that in the spread position the flanges 17 are clamped firmly in position in groove 6 whereby the outer faces of plate-like parts 4 and 5 come to lie firmly against the inside of the tubular profile 2. In this manner a connection with bending and torsional strength is realized between upright and beam. This is carried out using only a simple tool for tightening of screw 12.

In the case of disconnecting the reverse sequence is performed, whereby the screw bolt 12 is turned outward and the spring 7 will automatically move the plate-like parts 5 and 4 towards each other. Flanges 17 will thus be released from grooves 6 and the clamping piece and the beam can be removed from the upright.

According to a further embodiment of the invention the clamping member is formed with a protective casing 20 that is substantially a strip of comparatively soft material the height h of which corresponds with that of the clamping member. The end of the strip is formed with an outward facing flange 21, the height of which is greater than that of the strip.

The strip is bent into a U-shape such that it comes to lie around clamping member 3, whereby the one leg of the U is provided with a hole 22 in register with the hole 9 of the clamping member, and whereby the other side is formed with lip 23 cut out of the material and folded inward.

Fig. 3 shows that the casing 20 protects the clamping member completely relative to the inside of the tubular profile 2, and moreover covers the end wall surface 24 of the profile with the flange 21. In this way there is no direct contact between the upright and the beam and after disassembly no damage to the upright and beam is visible.

Casing 20 also has a locking function since when the clamping member 3 is fitted into the end part of beam 2 the flange 21 remains hooked outside the tubular profile so that clamping member 3 is held in place in the strip 20 that has been bent into a U-shape.

Falling of clamping member 3 out of beam 2 is prevented by the lip 23 which due to its spring action presses clamping member 3 in the direction of screw bolt 12 so that the screwed sleeve 10 is held permanently in the hole 16. The clamping member is hereby secured.

The recess 8 in the outer surface of the plate-like parts accommodates lip 23 fully when the clamping member is situated in the spread position.

Fig. 4 finally shows an alternative embodiment whereby the grooves 6 are positioned at an angle relative to plate-like parts 4, 5 so that a sloping fitting of the beams 2 relative to upright 1 also becomes possible. The starting point in this embodiment may also be profile stock of suitable section, whereby the clamping plate parts are sawn off at an angle. Manufacture and fitting of the clamping member is therefore simple and inexpensive.

The invention is not limited to the above described embodiments.

## Claims

1. Tridimensional construction consisting of profiled uprights having one or more undercut lengthwise grooves in the outer periphery thereof, and beams with open or closed channel-form transverse profile, which uprights and beams are joined to each other by a clamping member held in the end wall portion of a beam said member having a hook-like end part that is inserted into said undercut groove, **characterized in that** said clamping member consists of two identical plate-like parts, that each part is provided with a groove for the forming of said hook-like end part, whereby in the opposite end part on the side facing away from said groove a slot is arranged for receiving a flexible spring strip and that between both plate-like parts is arranged a pressure element acting counter to the spring action for moving apart the plate-like parts.

2. Construction as claimed in claim 2, **characterized in that** the slots lying opposite each other of the two plate-like parts that form the clamping member enclose an angle relative to each other.

3. Construction as claimed in claim 1 or 2, **characterized in that** both plate-like parts are held in a casing.

4. Construction as claimed in claim 3, **characterized in that** the casing has flanges parallel to the grooves in the plate-like parts.

5. Construction as claimed in claims 1-4, **characterized in that** the casing has a lip directed towards the flange, which lip falls into a recess in the outside of the plate-like part.

6. Construction as claimed in any of the foregoing claims, whereby the pressure element has the form of a screwed sleeve with a bolt screwable therein.

7. Construction as claimed in claim 6, **characterized in that** the screwed sleeve displays an enlarged head which fits into a cavity on the sides of the two plate-like parts forming a clamping member that face towards each other.

FIG. 1

FIG. 2

FIG.3

FIG.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | FR-A-2 129 259 (NICOLAS) <br> * Whole document * <br> --- | 1,2,6,7 | F 16 B 12/40 <br> F 16 B 7/04 |
| Y | AU-B- 514 900 (MARSHALL) <br> * Claim 1; figures * <br> --- | 1,2,6,7 | |
| A | DE-U-8 512 227 (PAZDERKA-HONSA) <br> * Claims 1,2 * <br> --- | 1 | |
| A | FR-A-2 585 801 (CERALNOR) <br> * Abstract * <br> --- | 1 | |
| A | FR-A-2 530 937 (FEHLBAUM) <br> * Claims 1,2; figures * <br> ----- | 1,3-5 | |

TECHNICAL FIELDS SEARCHED (Int. Cl.4)

F 16 B

The present search report has been drawn up for all claims

| Place of search | Date of completion of the search | Examiner |
|---|---|---|
| THE HAGUE | 24-06-1988 | VAN DER WAL W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)